# EUROPÄISCHE PATENTSCHRIFT

(11) **EP 0 953 246 B1**
(45) Veröffentlichungstag und Bekanntmachung des Hinweises auf die Patenterteilung: **19.04.2000**
(21) Anmeldenummer: 98955523.0
(22) Anmeldetag: 29.10.1998
(51) Int. Cl.: H04L 25/49, H04L 27/02

(54) **VERFAHREN ZUR VERMEHRUNG VON CODIERUNGSSTUFEN**
METHOD FOR MULTIPLYING THE LEVELS OF CODING
PROCEDE POUR MULTIPLIER LES ETAPES DE CODAGE

(30) Priorität: 26.06.1998 DE 19828631; 17.08.1998 DE 19837228
(43) Veröffentlichungstag der Anmeldung: 03.11.1999
(73) Patentinhaber: Dirr, Josef, D-81679 München (DE)
(72) Erfinder: Dirr, Josef, D-81679 München (DE)
(86) Internationale Anmeldenummer: EP9806777
(87) Internationale Veröffentlichungsnummer: WO9912318

(56) Entgegenhaltungen:
- WO-A-98/14042
- DE-A- 19 707 290

## Beschreibung

### Technisches Gebiet:

Die vorliegende Erfindung befasst sich mit der digitalen Übertragung von Information. Zur besseren Ausnützung der Übertragungswege werden höherwertige Codierungen vorgesehen. Solche Codierungen wurden sowohl über lei tergebundene als auch Funkwege und bei Lichtwellenleitern eingesetzt.

### Stand der Technik:

Diesbezüglich sind die ASK (Amplitude Shift Keying), die FSK (Frequency Shift Keying) und die PSK (Phase Shift Keying) bekannt. Neuerdings wurden auch Verfahren offenbart, bei denen die Phasenlage von Impulsen (Patente DE 43 45 253, US 5,587,797) und die Impulsdauer (PCT/EP97/07196-WO98/14042) als Codierstufen in der Weise vorgesehen wurden, indem hierfür ein Wechselstrom einer Frequenz und einer Phasenlage mit vorbestimmter Periodenzahl verwendet wurde und eine Änderung der Stufen durch Verkleinerung oder Vergrösserung der Zahl der Perioden erfolgte.

### Zusammenfassung der Erfindung:

Aufgabe der Erfindung ist es ein Verfahren aufzuzeigen, bei dem mit einfachen Mitteln mindestens eine Verdopplung der Codierstufen möglich ist und zwar für solche Codierungen, bei denen die Codeelemente aus einer ununterbrochenen periodischen Folge bestehen, wie z.B. bei einem Wechselstrom gleicher Frequenz, und bei denen jeweils das folgende Codeelement durch eine Amplitudenänderung unterschieden wird. Dabei wird die Vermehrung der Stufenzahl dadurch erreicht, indem der Beginn oder das Ende der Amplitudencodeelementemarkierung mit positiven oder negativen Elementen gekennzeichnet wird, z.B. mit einer positiven oder negativen Halbperiode.

Ist die periodische Folge ein Wechselstrom, so kann dieser auch unmittel bar als Sendewechselstrom vorgesehen werden,d.h. es ist dann kein besonderer Träger erforderlich. Die genauen Merkmale des Verfahrens sind aus dem Patentanspruch 1 ersichtlich.

### Kurze Beschreibung der Zeichnungen:

Fig.1a,b Prinzip der Erfindung mit positivem und negativem Beginn der Codeelemente.
Fig.2 ein 4-stelliges Codewort, bei dem die Codeelemente durch eine Impulsdauer dargestellt wird.
Fig.3 das Prinzip der bisherigen Erzeugung der 4 PSK
FIG.4 ein Vektordiagramm der 4 PSK
Fig.5 ein Vektordiagramm der 16 QAM
Fig.6 Das Prinzip der Codierung von Phasenstufen mit einem Wechselstrom
Fig.7 Ein Codewort mit 3 Phasenstufen und 4 Stellen
Fig.8 Prinzip einer Datenreduktion
Fig.9 Anwendung der Erfindung bei Rechteckimpulsen
Fig.10 Prinzip der Übertragung von Codierwechselströmen mittels Träger
Fig.11 Prinzip der Übertragung mehrerer Codierwechselströme mittels Träger
Fig.12 Prinzip der Codierung/Decodierung und Übertragung bei Verwendung eines Wechselstromes einer Frequenz.

### Wege zur Ausführung der Erfindung:

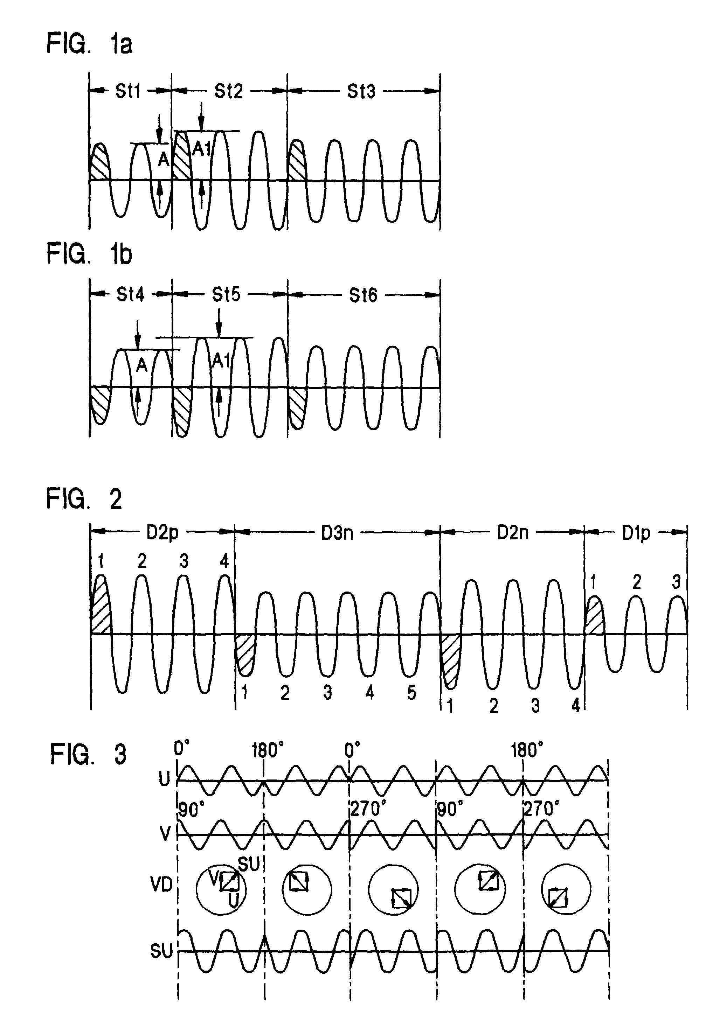

In den Fig.1a und 1b ist das Prinzip der Erfindung dargestellt, bei dem Impulsdauern, die durch eine vorbestimmte Zahl von Perioden eines Wechselstromes einer Frequenz markiert werden (PCT-Patentanmeldung PCT/EP97/07196 WO 98/14042). Den Stufen werden dabei 2,3 und 4 Perioden zugeordnet. In der Fig.1a beginnen die Stufen mit einer positiven Halbperiode. Gemäss der Erfindung erhält man dann zusätzlich 3 Stufen, wenn man z.B. die Stufen mit einer negativen Halbperiode beginnen lässt, wie in der Fig.1b dargestellt. Dies wirkt sich in Zahlen ausgedrückt so aus, dass man bei 3 Stufen und bei 2,3,4 und 5 Stellen 9,27,81,243 und bei 6 Stufen und 2,3,4 und 5 Stellen 36,216,1296,7776 Kombinationen erhält.

In der Fig.2 ist ein Codewort dargestellt, bei die Impulsdauern 3,4 und 5 In der Fig.2 ist ein 4-stelliges Codewort mit den 3 Stufen 3,4 und 5 Perioden auf der Basis von Impulsdauern dargestellt. Der 1. Stelle sind dabei 4 Perioden mit positivem Beginn zugeordnet D2p. Der 2. Stelle D3n sind 5 Perioden mit negativem Beginn, der 3. Stelle D2n 4 Perioden mit negativem Beginn und der 4. Stelle D1p 3 Perioden mit positivem Beginn. Da man also den positiven und negativen Beginn der Stufen ausnützt, erhält man dann 6 Stufen, sodass man damit 1296 Kombinationen erhält.

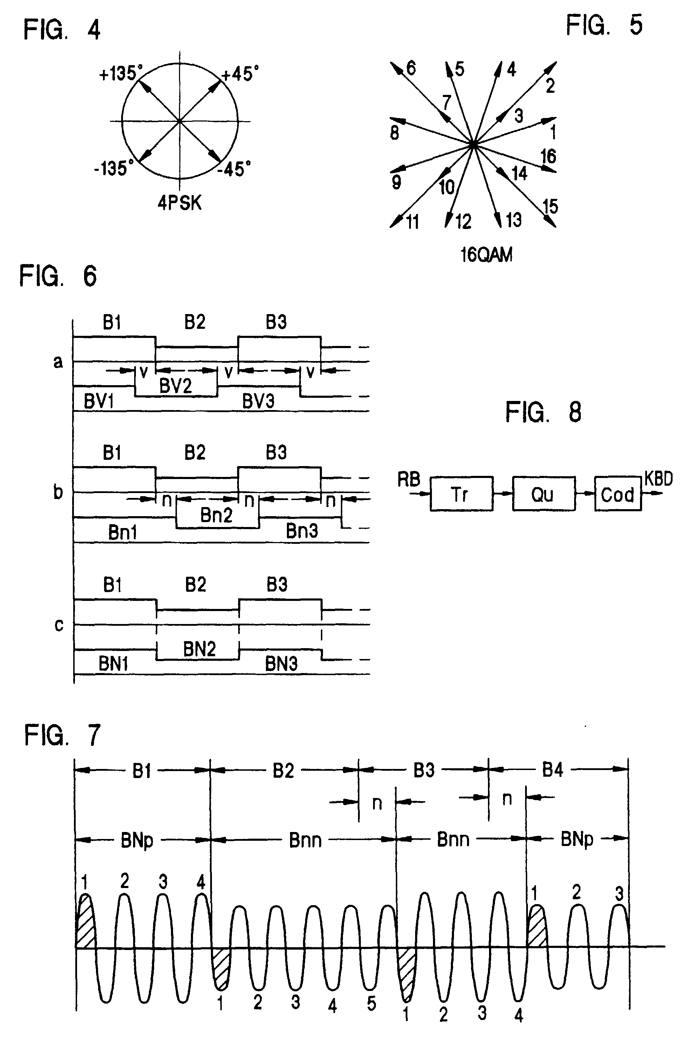

In der Fig.3 ist dargestellt auf welche Weise man die 4 Phasenstufen bei der 4PSK erzeugt. 2 um 90° phasenverschobene Wechselströme u und v werden jeweils um 180° phasenverschoben und für die Übertragung addiert. Man erhält damit beim Summenwechselstrom SU die 4 Phasensprünge +45°,+135°,-135° und -45° wie in der Fig.4 aufgezeichnet. Hieraus geht hervor, dass die Hardware für diese Phasencodierung doch sehr aufwendig ist. Bisher wurde vielfach die Codierung auch mit der 160AM, wie in der Fig.5 dargestellt, durchgeführt. Aus der Fig.5 geht doch hervor, wie aufwendig und schwierig hier die Decodierung ist. Dagegen ist bei der vorliegenden Erfindung nach der Auswertung des Gebinnzeichens bei der Decodierung nur eine Abzählung der Perioden und die Auswertung der Amplitudenänderung erforderlich.

In der Fig.6 ist das Prinzip der Phasencodierung mit nur einem Wechselstrom einer Frequenz und Phasenlage mit einer Bezugsphasenlage dargestellt. Man kann auch Differenzphasenlagen oder Absolutphasenlagen vorsehen. In der Fig.6a sind B1,B2,...die Bezugsphasenlagen, BV1,BV2,.. voreilende Phasenlagen und v der voreilende Phasenunterschied. In Fig.6b sind Bn1,Bn2,...nacheilende Phasenlagen und n der nacheilende Phasenunterschied. In der Fig.6c haben die Codierimpulse BN1,BN2,.. dieselbe Phasenlage wie die Bezugsimpulse. Den Impulsen mit der Bezugsphasenlage B1,B2,.. wird z.B. eine vorbestimmte Zahl von Perioden eines Wechselstromes zugeordnet. Durch Verkleinerung oder Vergrösserung des jeweiligen Impulses durch eine oder mehrere Perioden gegenüber dem Bezugsimpulses (v oder n) erhält man dann die gewünschte Phasenlage.

In der Fig.7 ist ein Beispiel für eine solche Phasencodierung dargestellt. B1 bis B4 sind Bezugsphasenimpulse. Dem Bezugsimpuls werden 4 Perioden eines Wechselstromes gleicher Frequenz und Phasenlage zugeordnet. BNp ist ein Impuls mit der Phasenlage des Bezugsimpulses B1 und beginnt mit einer positiven Halbwelle. Bnn ist ein nacheilender Impuls und wird daher um eine Periode vergrössert und beginnt mit einer negativen Halbwelle. Der folgende Impuls Bnn behält die nacheilende Phasenlage und beginnt ebenfalls mit einer negativen Halbwelle. Da dieser dieselbe Phasenlage wie Bnn/B2 beibehält, benötigt er nur die Periodenzahl des Bezugsimpulses. Der nächste Impuls BNp/B4 hat wieder die Phasenlage des Bezugsimpulses und erhält deshalb eine Periode weniger als der Bezugsimpuls. Der Beginn des Codeelementes ist wieder positiv. Im Beispiel werden also 4 Stufen vorgesehen und zwar 2 Normalphasenlagen BN mit positivem und negativen Beginn und 2 nacheilende Phasenlagen mit positivem und negativem Halbperiodenbeginn. Das dargestellte Codewort selbst besteht aus BNp,Bnn,Bnn und BNp.

Für die Codierung kann man auch Halbwellen sparen, wie aus der Fig.7 ersichtlich ist, wenn die Abzählung z.B. der Perioden immer auf der Seite des jeweiligen Beginns erfolgt. In Fig.7 z.B. BNp/B1 1,2,3,4 - Bnn/B3 1,2,3,4 - BNp/B4 1,2,3.

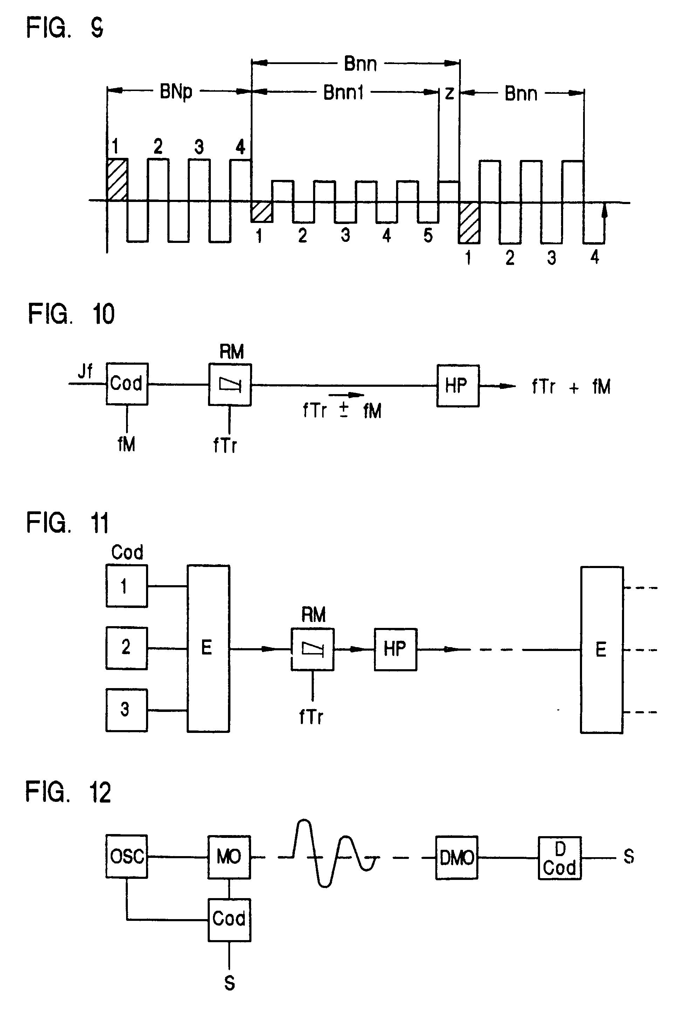

In der Fig.9 ist ein Codewort dargestellt, bei dem Rechteckimpulse als Elemente verwendet werden. Als periodische Folge könnte man auch andere Impulse wie z.B. Sägezahnimpulse vorsehen. Beim 1. Impuls BNp genügen bereits 7 Halbperioden für die Markierung. Beim 2. Impuls Bnn sind es 10 Halbperioden und beim 3. Impuls Bnn 7 Halbperioden. Würde man den 3. Impuls mit einer positiven Halbperiode beginnen, so würde der 2. Impuls Bnn1 nur 9 Halbperioden erhalten und der 3. Impuls Bnn 8 Halbperioden, da die Halbperiode z zum 3. Impuls käme.

In der Fig.12 ist ein Prinzip einer Schaltung für die Codierung, Übertragung und Decodierung der Information gemäss der Erfindung dargestellt Im Oszillator Osc wird der Codierwechselstrom erzeugt und dem Modulator MO und dem Codierer Cod zugeschaltet. Über S wird dem Codierer die Information zugeführt. Entsprechend dem Code werden im Codierer die Halbperioden oder Perioden abgezählt und nach jedem Codeelement eine Amplitudenänderung beim Modulator veranlasst. Der Codierwechselstrom kann nun unmittelbar auf den Übertragungsweg gegeben werden. Im Demodulator und Decodierer (DMO/Dcod) wird dann die Information in den ursprünglichen Zustand umgewandelt. Das Schaltungsprinzip sagt doch aus, dass man mit einer einfachen Hardware auskommt.

Natürlich kann man diese Codierung auch bei der Datenreduktion anwenden. In der Fig.8 ist hierfür ein Prinzipschaltbild dargestellt. Das Rohbild RB wird der Transformation Tr und in der Folge dem Quantisierer zugeführt. Die komprimierte und die quantisierte (Qu) Bildinformation wird über den Codierer Cod als komprimierte Bilddaten KBD auf den Übertragungsweg gegeben.

Natürlich kann man auch den Codierwechselstrom mittels Träger übertragen. In der Fig.10 ist ein solches Prinzipschaltbild gezeichnet. Dem Codierer Cod wird der Codierwechselstrom fM und die Information Jf zugeführt. Der codierte Wechselstrom wird an den Ringmodulator RM geschaltet an den auch der Träger fTr geführt ist. Am Ausgang des Ringmodulators erhält man dann eine obere Seitenfrequenz fTr+fM und eine untere Seitenfrequenz fTr-fM. Mit einem Hochpass HP wird dann die untere Seitenfrequenz unterdrückt, sodass auf den Übertragungsweg nur mehr fTr+fM gelangt.

In der Fig.11 ist das Schaltungsprinzip zur Übertragung mehrerer Codierwechselströme über ein Trägerfrequenzsystem dargestellt. Von den 3 Codierern 1,2,3 werden die Codierwechselströme f1,f2,f3 über Entkoppler E dem Ringmodulator RM zugeführt. Über fTr ist der Träger an den Ringmodulator geschaltet. Am Ausgang des Ringmodulators erhält man dann ein oberes und ein unteres Seitenband. Mit dem Hochpass HP wird das untere Seitenband unterdrückt, sodass auf den Leitungsweg das Seitenband fTr+(f1,f2,f3) kommt. Auf der Empfangsseite kann man mittels Filter die 3 Frequenzen trenen oder über Entkoppler entsprechenden Resonanzkreisen zuführen und in der Folge decodieren. Mit einer gleichen Anordnung kann man weitere 3 Kanäle übertragen und aber das obere Seitenband unterdrücken. Man wird Codierwechselströme und einen oder mehrere Träger so wählen, dass das Frequenzband des Übertragungskanal am günstigsten ausgenützt wird.

Eine weitere Erhöhung der Stufen ist durch die Anwendung der Quadraturamplitudenmodulation möglich. Dabei werden 2 um 90° phasenverschobene Codierwechselströme gleicher Frequenz vorgesehen, auf die die Stufen ver teilt werden. An einem Beispiel soll dies erläutert werden. Werden z.B. Stufen mit 3,4 und 5 Perioden verwendet, also 3 Stufen und werden diese gemäss der Erfindung mit einem positiven und einem negativen Beginn markiert,so stehen bereits 6 Stufen zur Verfügung.Beim um 90° phasenverschobenen Codierwechselstrom wird dieselbe Stufenzahl vorgesehen,sodass dies 6x6=36 Stufen ergibt.Den um 90° phasenverschobenen Codierwechselstrom kann man auch nur für die Stellen verwenden. Man kann also parallel als auch seriell eine Stufenmehrung erhalten. Man kann auch 2 oder mehrere gleichphasige Codierwechselströme vorsehen, wenn sie auf solche Träger aufmoduliert werden, dass die oberen und unteren Seitenfrequenzen gegen einander einen genügenden Störabstand haben. Mit Hilfe von Filtern kann man dann immer die unerwünschten Seitenfrequenzen aussieben.

Beim Farbfernsehen sind bei codemultiplexer Übertragung aller Signale 12bit =4098 Kombinationen erforderlich. Werden die Stufen 3,4,5 und 6 Perioden mit positivem und negativem Beginn vorgesehen, so sind dies 8 Stufen. Bei 4 Stellen je Codewort erhält man dann 4096 Kombinationen. Im Durchschnitt sind je Codeelement 4,5 Perioden erforderlich, für ein Code wort also 4,5x4=18 Perioden. Bei einem Abgriff von 5MHz sind dann 90MHz Codierwechselstrom erforderlich, wenn eine Speicherung auf der Sende-und Empfangsseite erfolgt. Will man unmittelbar mit dem Abgriff senden, muss eine höhere Frequenz gewählt werden und zusätzlich das Codewort um ein Füllcodeelement erweitert werden.

In den Beispielen wurde immer für die Verdopplung der Stufen beim Beginn des jeweiligen Codeelementes das Merkmal positive oder negative Halbperiode vorgesehen. Man kann dieses Merkmal auch am Ende des Codeelementes vorsehen.

## Patentansprüche

1. Verfahren zur Vermehrung von Codierungsstufen, bei dem als Codeelemente ununterbrochene periodische Folgen eines Signals (z.B. ein Wechselstrom gleicher Frequenz und Phasenlage) vorgesehen werden, bei denen das jeweils folgende Codeelement durch eine Amplitudenänderung markiert wird,dadurch gekennzeichnet, daß eine Mehrung der Codierungsstufen in der Weise erfolgt, indem der Anfang oder das Ende des jeweiligen Codeelementes mit einer positiven oder negativen Halbwelle beginnt oder endet.

2. Verfahren nach Patentanspruch 1, dadurch gekennzeichnet, daß die Phasenlagen von Impulsen zu Bezugsimpulsen oder zum vorhergehenden Impuls als Stufen vorgesehen werden, wobei alle Impulse durch Halbperioden oder Perioden markiert werden und die Änderung der Phasenlage durch Verkleinerung oder Vergrößerung der Zahl der Halbperioden oder Perioden erfolgt.

3. Verfahren nach Patentanspruch 1, dadurch gekennzeichnet, daß die Dauer von Impulsen oder die Dauer der Differenz zum vorherigen Impuls als Stufe vorgesehen wird, wobei die Markierung der Stufen durch ganzzahlige Halbperioden oder Perioden erfolgt und die Änderung des Codeelementes durch Verkleinerung oder Vergrößerung der Halbperioden- oder Periodenzahl erfolgt.

4. Verfahren nach Patentanspruch 1, dadurch gekennzeichnet, dass als ununterbrochene periodische Folge Rechteck- oder Sägezahnimpulse vorgesehen werden.

5. Verfahren nach den Patentansprüchen 1 bis 3, dadurch gekennzeichnet, dass bei Verwendung von Wechselströmen einer Frequenz und Phasenlage als periodische Folge die Stufen oder Stellen auf 2 um 90° phasenverschobene Wechselströme verteilt werden, die für die Übertragung addiert werden.

6. Verfahren nach den Patentansprüchen 1 bis 3, dadurch gekennzeichnet, daß bei Verwendung von Wechselströmen einer Frequenz und Phasenlage als periodische Folge die Stufen und Stellen auf 2 um 90° phasenverschobene Wechselströme verteilt werden, die für die Übertragung addiert werden.

7. Verfahren nach den Ansprüchen 1 bis 4, dadurch gekennzeichnet, dass die periodischen Folgen mittels Träger übertragen werden.

8. Verfahren nach den Patentansprüchen 1 bis 4, dadurch gekennzeichnet, daß die Codeelemente und Codewörter und die Stellen auf 2 oder mehrere Folgen verschiedener Frequenz verteilt werden.

9. Verfahren nach den Patentansprüchen 1 bis 4, dadurch gekennzeichnet, dass die Codeelemente und Codewörter oder die Stellen auf 2 oder mehrere Folgen verschiedener Frequenz verteilt werden.

10. Verfahren nach den Patentansprüchen 1 bis 4, dadurch gekennzeichnet, daß die Codeelemente oder Codewörter und die Stellen auf 2 oder mehrere Folgen verschiedener Frequenz verteilt werden.

11. Verfahren nach den Patentansprüchen 1 bis 4, dadurch gekennzeichnet, daß die Codeelemente oder Codewörter oder die Stellen auf 2 oder mehrere Folgen verschiedener Frequenz verteilt werden.

12. Verfahren nach den Patentansprüchen 1 bis 11, dadurch gekennzeichnet, daß bei der Codierung und Decodierung die Abzählung der Halbperiodenglieder immer auf der Seite der positiven oder negativen Kennzeichnung erfolgt.

13. Verfahren nach den Patentansprüchen 1 bis 3, dadurch gekennzeichnet, dass bei einer Trägerfrequenzübertragung die Auswertung eines oder mehrerer Codierwechselströme, die in der oberen oder unteren Seitenfrequenz enthalten sind oder die im oberen oder unteren Seitenband enthalten sind mittes 1 Resonanzkreisen ausgewertet werden.

14. Verfahren nach den Patentansprüchen 1 bis 3, dadurch gekennzeichnet, dass die Codierwechselströme zugleich als Sendewechselströme vorgesehen werden.

## Claims

1. A method of increasing encoding stages, wherein provided as encoding elements are uninterrupted periodic sequences of a signal (for example an alternating current of identical frequency and phase position), in which the respectively following encoding element is marked by a change in amplitude, characterised in that an increase in the encoding stages is effected by the beginning or the end of the respective encoding element beginning or ending with a positive or negative half-wave.

2. A method according to claim 1 characterised in that the phase positions of pulses in relation to reference pulses or in relation to the preceding pulse are provided as stages, wherein all pulses are marked by half-periods or periods and the change in the phase position is effected by reducing or increasing the number of half-periods or periods.

3. A method according to claim 1 characterised in that the duration of pulses or the duration of the difference in relation to the preceding pulse is provided as a stage, wherein marking of the stages is effected by integral half-periods or periods and the change in the encoding element is effected by reducing or increasing the number of half-periods or periods.

4. A method according to claim 1 characterised in that rectangular or sawtooth pulses are provided as the uninterrupted periodic sequence.

5. A method according to claims 1 to 3 characterised in that when using alternating currents of a frequency and phase position as the periodic sequence the stages or places are distributed to 2 alternating currents which are phase-shifted through 90° and which are added for the transmission.

6. A method according to claims 1 to 3 characterised in that when using alternating currents of a frequency and phase position as the periodic sequence the stages and places are distributed to 2 alternating currents which are phase-shifted through 90° and which are added for the transmission.

7. A method according to claims 1 to 4 characterised in that the periodic sequences are transmitted by means of carriers.

8. A method according to claims 1 to 4 characterised in that the encoding elements and code words and the places are distributed to two or more sequences of varying frequency.

9. A method according to claims 1 to 4 characterised in that the encoding elements and code words or the places are distributed to two or more sequences of varying frequency.

10. A method according to claims 1 to 4 characterised in that the encoding elements or code words and the places are distributed to two or more sequences of varying frequency.

11. A method according to claims 1 to 4 characterised in that the encoding elements or code words or the places are distributed to two or more sequences of varying frequency.

12. A method according to claims 1 to 11 characterised in that upon encoding and decoding enumeration of the half-period members is always effected on the side of the positive or negative designation.

13. A method according to claims 1 to 3 characterised in that in carrier frequency transmission evaluation of one or more encoding alternating currents which are contained in the upper or lower side frequency or which are contained in the upper or lower sideband are evaluated by means of resonance circuits.

14. A method according to claims 1 to 3 characterised in that the encoding alternating currents are additionally provided as transmission alternating currents.

## Revendications

1. Procédé pour la multiplication de niveaux de codage, où sont prévus, en tant qu'éléments de code, des séquences périodiques ininterrompues d'un signal (comme par exemple un courant alternatif de fréquence et de position de phase constants), et où chaque passage à l'élément suivant est marqué par une modification de l'amplitude,
caractérisé
en ce qu'une multiplication des niveaux de codage a lieu par le fait que chaque élément de code débute ou se termine par une demi-onde positive ou négative.

2. Procédé suivant la revendication 1,
caractérisé
en ce que sont prévues, en tant que niveaux, les positions de phase d'impulsions par rapport à des impulsions de référence ou par rapport à l'impulsion précédente, toutes les impulsions étant marquées au moyen de demi-périodes ou de périodes, et la modification de la position de phase étant réalisée au moyen d'une augmentation ou d'une diminution du nombre de périodes ou de demi-périodes.

3. Procédé suivant la revendication 1,
caractérisé
en ce que sont prévues, en tant que niveaux, la durée des impulsions ou la durée de la différence par rapport à l'impulsion précédente, le marquage des niveaux étant réalisé au moyen de nombres entiers de demi-périodes ou de périodes et la modification des éléments de code étant réalisée par une diminution ou une augmentation du nombre de demi-périodes ou de périodes.

4. Procédé suivant la revendication 1,
caractérisé
en ce que, en tant que séquence périodique ininterrompue, sont prévues des impulsions rectangulaires ou en dents de scie.

5. Procédé suivant l'une quelconque des revendications 1 à 3,
caractérisé
en ce que, lorsque sont utilisés comme séquence périodique des courants alternatifs de fréquence et de position de phase constantes, les niveaux ou les positions sont répartis sur deux courants alternatifs déphasés de 90° qui sont additionnés en vue de la transmission.

6. Procédé suivant l'une quelconque des revendications 1 à 3,
caractérisé
en ce que, lorsque sont utilisés comme séquence périodique des courants alternatifs de fréquence et de position de phase constantes, les niveaux et les positions sont répartis sur deux courants alternatifs déphasés de 90° qui sont additionnés en vue de la transmission.

7. Procédé suivant l'une quelconque des revendications 1 à 4,
caractérisé
en ce que les séquences périodiques sont transmises au moyen d'ondes porteuses.

8. Procédé suivant l'une quelconque des revendications 1 à 4,
caractérisé
en ce que les éléments de code et mots de code et les positions sont répartis sur deux ou plusieurs séquences de fréquences différentes.

9. Procédé suivant l'une quelconque des revendications 1 à 4,
caractérisé
en ce que les éléments de code et mots de code ou les positions sont répartis sur deux ou plusieurs séquences de fréquences différentes.

10. Procédé suivant l'une quelconque des revendications 1 à 4,
caractérisé
en ce que les éléments de code ou mots de code et les positions sont répartis sur deux ou plusieurs séquences de fréquences différentes.

11. Procédé suivant l'une quelconque des revendications 1 à 4,
caractérisé
en ce que les éléments de code ou mots de code ou les positions sont répartis sur deux ou plusieurs séquences de fréquences différentes.

12. Procédé suivant l'une quelconque des revendications 1 à 11,
caractérisé
en ce que, lors du décodage et du décodage, le comptage des membres de demi-périodes est toujours effectué soit du côté du marquage positif soit du côté du marquage négatif.

13. Procédé suivant l'une quelconque des revendications 1 à 3,
caractérisé
en ce que, lors d'une transmission à fréquences porteuses, l'évaluation d'un ou plusieurs courants alternatifs de codage contenus dans la fréquence latérale supérieure ou inférieure ou qui sont contenus dans la bande latérale supérieure ou inférieure est effectuée au moyen de circuits de résonance.

14. Procédé suivant l'une quelconque des revendications 1 à 3,
caractérisé
en ce qu'il est prévu que les courants alternatifs de codage font également office de courants alternatifs d'émission.
